Europäisches Patentamt

European Patent Office

Office européen des brevets

(19)

(11) **EP 1 254 965 B1**

(12) **EUROPEAN PATENT SPECIFICATION**

(45) Date of publication and mention
of the grant of the patent:
**14.09.2005 Bulletin 2005/37**

(51) Int Cl.[7]: **C22C 21/00**, B23K 35/28,
B32B 15/01, F28F 21/08

(21) Application number: **02076669.7**

(22) Date of filing: **25.04.2002**

(54) **High strength aluminium tube material**

Hochfeste Aluminiumlegierung geeignet für ein Rohr

Alliage d'aluminium à haute résistance mécanique pour un tube

(84) Designated Contracting States:
**AT BE CH CY DE DK ES FI FR GB GR IE IT LI LU
MC NL PT SE TR**

(30) Priority: **03.05.2001 SE 0101570**

(43) Date of publication of application:
**06.11.2002 Bulletin 2002/45**

(73) Proprietor: **Sapa Heat Transfer AB
612 81 Finspong (SE)**

(72) Inventors:
 • **Stenqvist, Torkel
612 40 Finspong (SE)**
 • **Schölin, Kent
612 34 Finspong (SE)**
 • **Norgren, Stefan
612 36 Finspong (SE)**

(74) Representative: **Hammond, Andrew David et al
Valea AB
Lindholmspiren 5
417 56 Göteborg (SE)**

(56) References cited:
**EP-A- 0 718 072**

 • **PATENT ABSTRACTS OF JAPAN vol. 1998, no.
02, 30 January 1998 (1998-01-30) -& JP 09 268339
A (FURUKAWA ELECTRIC CO LTD:THE), 14
October 1997 (1997-10-14)**
 • **PATENT ABSTRACTS OF JAPAN vol. 1999, no.
11, 30 September 1999 (1999-09-30) -& JP 11
172357 A (DENSO CORP;SUMITOMO LIGHT
METAL IND LTD), 29 June 1999 (1999-06-29)**
 • **PATENT ABSTRACTS OF JAPAN vol. 018, no.
435 (M-1655), 15 August 1994 (1994-08-15) -& JP
06 134592 A (SKY ALUM CO LTD), 17 May 1994
(1994-05-17)**
 • **PATENT ABSTRACTS OF JAPAN vol. 017, no.
693 (C-1144), 17 December 1993 (1993-12-17) -&
JP 05 230577 A (SUMITOMO LIGHT METAL IND
LTD;OTHERS: 01), 7 September 1993
(1993-09-07)**
 • **PATENT ABSTRACTS OF JAPAN vol. 017, no.
336 (M-1435), 25 June 1993 (1993-06-25) -& JP 05
039994 A (SKY ALUM CO LTD), 19 February 1993
(1993-02-19)**

**Description**

The present invention refers to an aluminium alloy, a clad material for brazed products, such as heat exchangers, containing said alloy as a core, as well as a method for producing a material used in brazed products from said alloy. The material obtained has got a high strength after brazing, a high corrosion resistance and may be used to make products by any brazing method, in particular the controlled atmosphere brazing method (CAB).

Two alloys are presently the common choice as tube material for radiators by the manufacturers using CAB, namely the standard AA3003 and the so called long-life 3005 alloy. The latter is a standard alloy AA3005 produced with a special production process, which increases the corrosion resistance of the material. However, the mechanical strength does not meet the present requirements of the radiator manufacturers. A higher strength material could be used in thinner tubes, giving a lighter weight radiator. At the same time thinner tubes requires improved resistance against corrosion attack causing perforation.

To obtain an aluminium alloy with a very high strength precipitation hardenable alloys must be used as the precipitation hardening mechanism gives the highest strength of the aluminium alloys. In present commercial brazing applications only the AlMgSi system can be used as the alloys with the other precipitation hardenable systems have a too low melting point.

In AlMgSi alloys small $Mg_2Si$ precipitates form during ageing, causing the strength to increase. Thus the trivial solution to increase the strength would be to increase the Mg and the Si contents, allowing more $Mg_2Si$ to form. However, Mg reacts with the flux during brazing and this limits the amount of Mg.

An important aspect considering the strength of heat treatable brazing alloys is the quench sensitivity. Most CAB furnaces today cannot give the fast cooling needed for reaching the degree of supersaturation of Mg and Si after brazing in order to obtain high strengths.

JP5230577 discloses a clad material having an aluminium core with a high-alloyed waterside cladding with a lot of Mg [1.0 - 2.5 wt%] added to improve the strength. The applicants have not considered increasing the Mg content of the core to obtain a heat treatable alloy without the aid of additional Mg from the waterside.

In JP9268339 an aluminium alloy brazing sheet suitable for use in a heat exchanger to be joined and assembled by vacuum brazing is described. CAB is not mentioned and the problem of quench sensitivity is clearly not considered. The Mn range preferred is stated to be 0.8-1.1 wt%

JP11172357 describes a corrosion resistant aluminium alloy clad plate for vacuum brazing excellent in corrosion resistance and suitably used as the core plate material of a drawn cup type heat exchanger. The problem of quench sensitivity is not considered.

JP6134592 discloses a brazing sheet where two different braze claddings are combined with a core from the 3000 series (AlMn) and 6000 (AlMgSi) aluminium alloy series. The core should contain 0.05-1.0% Cu and the Cu content of the two claddings should be balanced to the Cu content of the core (Inner clad Cu=core Cu ± 0.5%, outer clad Cu more than 0.05, but less than inner clad Cu). This gives, according to the patent, a balanced copper content and no galvanic corrosion due to copper in the formed fillet. Strength is not a consideration in this patent.

In EP-718072 is disclosed a brazing sheet having a clad core of an aluminium alloy with a high strength. The Cu+Mg content is controlled to be more than 0.7 wt% and the copper content should preferably be more than 0.65wt%. The manganese content is kept above 1wt%.

In JP-4263033 an aluminium alloy having a low Cu and Mg content is disclosed. The Mn content is kept above 1 wt% to achieve a high strength material.

In JP-4202735 the Mn content is also kept above 1 wt%. Both Japanese patents depend on a sacrificial anode layer is to obtain the required corrosion resistance.

**Summary of the invention**

The object of the present invention is to provide a high strength aluminium alloy while keeping the Mg content low. Another object is to provide a heat treatable material with a sufficient corrosion resistance, that is a material that resists early stage perforation without having to use a sacrificial anode layer, and with a low quench sensitivity that may be brazed using CAB. Preferred applications are tubes for heat exchangers, like automotive radiators or heaters, or tube plates for oil coolers or evaporators, but other applications are not excluded.

The invention will now be described in more detail, references below being made to the accompanying drawings wherein

Figure 1 shows the yield strength of three alloys according to the invention compared to a reference material with a high Mn content after braze simulation, cooling rate ~1.0°C/s and artificial ageing at 180°C.

Figure 2 shows the percentage perforated area after SWAAT testing of Ti containing alloys of low and high Cu content.

The reason for the limitation of the composition of the alloy according to the present invention and its range will now be described.

The concentration of silicon should be 0.6-0.9 wt%. Below 0.6 wt% the ageing response is low, above 0.9 wt% the solidus temperature of the alloy is significantly lowered.

An excess of Si in solid solution over the Mg content improves the precipitation of $Mg_2Si$ which increases the strength. The principle for calculating the excess silicon can be exemplified by the formula:

$$\text{Excess Si} = \text{wt\% Si} - (\text{Molarweight(Si)} \times \text{wt\% Mg} / 2\text{Molarweight(Mg)})$$

assuming that all Mg reacts to form $Mg_2Si$, i.e. $2Mg+Si \rightarrow Mg_2Si$.

This gives a crude estimation of the Si excess, not taking into account other precipitates containing Si. A more precise calculation can be made by taking into account the amount Mn and Fe reacting with Si, thus reducing the excess Si.

Mg increases the strength by forming $Mg_2Si$ precipitates during ageing, but lowers the brazeability by reacting with the flux. The concentration should be 0.1-0.35 wt%. Below 0.1 wt% the effect on the strength is negligible and above 0.35 wt% brazing becomes difficult.

0.25-0.35 wt% Cu is added to further increase the strength. Copper improves the nucleation of $Mg_2Si$, but it is also a known strengthening agent in aluminium when in solid solution. However, Cu increases the hot crack sensitivity during casting, and decreases the corrosion resistance and the solidus temperature is lowered.

To improve the corrosion resistance 0.1-0.25 wt% was added to the alloy. Ti is distributed in thin Ti-rich layers in the material. This causes any corrosion attack to proceed in the lateral direction whereby pitting corrosion is avoided and the corrosion attack becomes lamellar. Below 0.1 wt% this effect is negligible, above 0.25 wt% coarse precipitates are formed which may reduce the corrosion resistance and the workability of the material.

Manganese in solid solution increases the strength, however the quench sensitivity is also increased. Thus, a low Mn content is beneficial to the strength if cooling rates are low. Furthermore, Mn is beneficial to the corrosion resistance. The Mn content should be 0.4-0.7 wt%.

Fe has an adverse effect on the corrosion resistance, but reduces the hot cracking sensitivity of Cu containing alloys and may therefore be present up to 0.7 wt%.

Zr has shown to have a positive influence on the strength, but increases the risk for coarse precipitates during casting. Thus,0.05-0.25 wt% Zr may optionally be added.

The claimed material is produced by casting an aluminium alloy according to the invention, and thereafter subjecting the obtained material to a hot rolling and a cold rolling process. After said casting process the material may be scalped and clad with at least one additional layer. The material may be partially or fully annealed after the final cold rolling step, or the annealing step may be omitted.

**Example 1**

Four alloys were designed using the composition of the high Mn material as a reference. The compositions of the alloys are shown in Table 1. The Ti addition was made as it has been found that Ti increases the corrosion resistance in similar alloys.

The alloys were cast in 9 mm thick ingots in a water cooled, thin walled copper mould. The ingot was removed from the mould when it still was hot (=400°C) and sprinkled with water, thus only primary precipitation from the melt is considered to have occurred. It is likely that AlFeSi, AlFeMnSi, AlFeCuSi, AlCuMgSi, and $Mg_2Si$ are present in the ingots, but no investigation of the precipitates or of the microstructure was made. The ingots were scalped on both sides to a thickness of 8,5 mm.

All ingots were cold rolled to 2,3 mm gauge where they became too hard to roll further. A partial annealing at 300°C for 1 h (the samples were put in and taken out from a heated furnace) before further cold rolling to 1 mm. Alloy no. 3 was rolled with higher reductions to 1 mm, however, the edge cracking was substantial and one ingot was destroyed. An interanneal was performed on all materials at 1 mm by heating with 50°C/h to 450°C, 1 h dwell, cooling with 50°C/h to room temperature. Finally the materials were cold rolled down to 0.6 mm.

Table 1

| Chemical composition, wt-%, melt analysis | | | | | | | |
|---|---|---|---|---|---|---|---|
| Designation | Si | Fe | Cu | Mn | Mg | Zr | Ti |
| Reference | 0.75 | 0.32 | 0.30 | 0.87 | 0.25 | - | - |

Table 1   (continued)

| Chemical composition, wt-%, melt analysis | | | | | | | |
|---|---|---|---|---|---|---|---|
| Designation | Si | Fe | Cu | Mn | Mg | Zr | Ti |
| LoMn | 0.73 | 0.32 | 0.30 | 0.63 | 0.25 | - | - |
| Zr | 0.74 | 0.29 | 0.30 | 0.87 | 0.24 | 0.16 | - |
| Ti | 0.76 | 0.31 | 0.30 | 0.91 | 0.27 | - | 0.16 |

The materials were cut to suitable lengths for tensile testing and braze simulated in air in a laboratory convection furnace. The materials were artificially aged at 180°C for 10, 20, and 44 h. The ageing commenced 1 day after the braze simulation. Only air cooled samples (~1°C/s) were used.

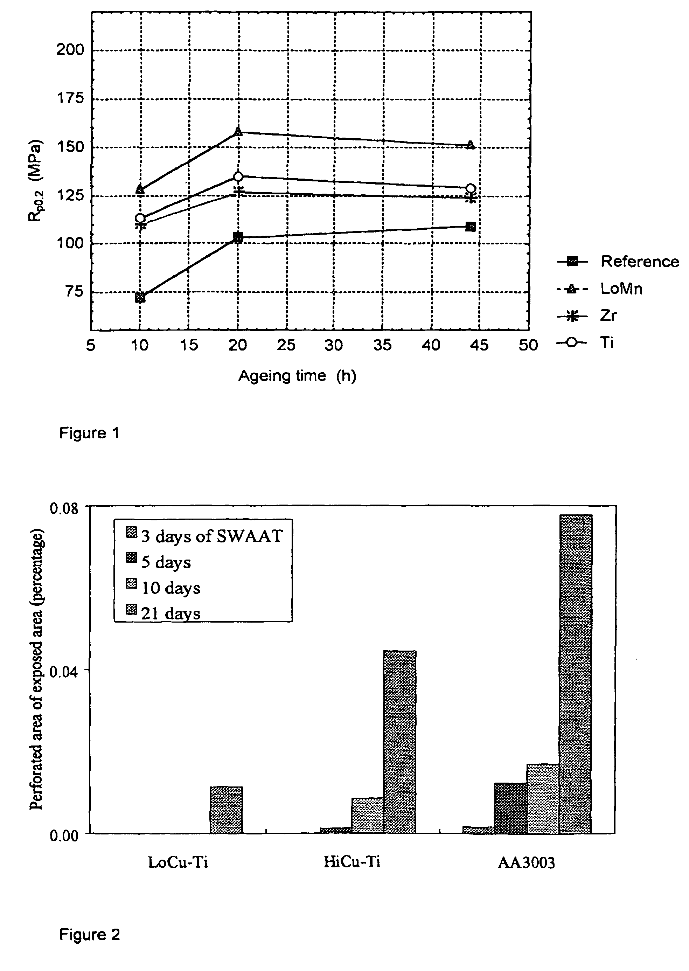

The tensile tests results of the artificially aged materials are shown in Figure 1. The LoMn alloy has a much higher strength than the Reference material, 50 MPa higher $R_{p0.2}$, in spite of the same amount of Mg and Si. This indicates that the Mn-bearing particles act as preferential nucleation points, and thereby decrease the maximum attainable strength and increases the quench sensitivity. Reducing the Mn from 0.9 to 0.6 increased the artificially aged strength. This is attributed to a lower quench sensitivity.

Zr and Ti have a substantial influence on the strength (about 20 MPa for $R_{p0.2}$). The influence of Ti is somewhat higher.

## Example 2

Two full scale experimental materials were produced. The materials were cast and rolled. Samples were taken when the material was about 1.2 mm thick, *i.e.* a thickness suitable for headers, before the inter-annealing at 0.375 mm, *i.e.* a hard material. After the final cold rolling pass with a thickness of about 0.30 mm, *i.e.* a tube gauge in temper H14, nominal reduction 17 %. Table 2 shows the compositions of the two full-scale experimental alloys.

The reference material AA3003 was clad on one side. The experimental alloys were clad on one side (10.6 per cent of the total thickness) after scalping and not submitted to homogenisation.

Sheets of the materials were braze simulated in the vacuum furnace at about $10^{-4}$ torr vacuum pressure according to the following standard brazing cycle:

Heating from room temperature to 600°C in 45 minutes followed by a 5 minute dwell before samples were cooled down to room temperature in free air. The liquidus temperature of the braze cladding is about 590°C.

To investigate the corrosion resistance Sea Water Acetic Acid Testing (SWAAT) according to ASTM G85-94 Annex A3 and D1141 without any heavy metals was applied. Samples were cut out to 60 x 130 mm size and prepared by degreasing, masking the backside with a plastic adhesive film and having the edges lacquered.

Figure 2 clearly shows that the AA3003 alloy has the lowest resistance against perforation. The LoCu-Ti alloy indicate a somewhat higher resistance against perforation compared to the HiCu-Ti alloy. Especially the HiCu-Ti alloy had a low resistance against perforation. The explanation for this could be that during solidification and formation of the primary $\alpha$-aluminium phase copper is enriched in the last melt before the eutectic is formed. It is therefore assumed that a significant amount of copper containing precipitates, probably $CuAl_2$, in the eutectic of the HiCu-Ti alloy, reduces its corrosion resistance compared to the eutectic formed in the LoCu-Ti alloy. Thus, a high copper content seems to be detrimental to the corrosion resistance.

Table 2

| Composition of tube core alloys in weight per cent (wt.%). From charge analysis. | | | | | | | | |
|---|---|---|---|---|---|---|---|---|
| Alloy designation | Thickness * mm | Temper | Si | Fe | Cu | Mn | Mg | Ti |
| LoCu-Ti | 0.30 | H14 | 0.74 | 0.23 | 0.27 | 0.67 | 0.31 | 0.14 |
| HiCu-Ti | 0.30 | H14 | 0.75 | 0.25 | 0.61 | 0.69 | 0.28 | 0.16 |

*Post-braze thickness

## Example 3

Two alloy compositions according to the invention with and without Zr was compared, see table 3. Zr was shown to be beneficial to the strength, see table 4.

**EP 1 254 965 B1**

Table 3

| Chemical composition of the alloys (wt%). | | | | | | | | |
|---|---|---|---|---|---|---|---|---|
| Design | Part | Si | Fe | Cu | Mn | Mg | Ti | Zr |
| LoCu-Ti [2] | Core | 0.74 | 0.23 | 0.27 | 0.67 | 0.31 | 0.14 | - |
| | Br. clad. | 9.9 | 0.14 | <0.01 | 0.01 | 0.01 | <0.01 | <0.01 |
| LoCu- TiZr [2] | Core | 0.76 | 0.25 | 0.28 | 0.69 | 0.30 | 0.15 | 0.12 |
| | Br. clad. | 10.1 | 0.16 | <0.01 | <0.01 | <0.01 | <0.01 | <0.01 |

| Designation | Braze simulated | | | | |
|---|---|---|---|---|---|
| | Natural ageing time (days) | Gauge (mm) | $R_{p0.2}$ (MPa) | $R_m$ (MPa) | $A_{50\,mm}$ (%) |
| LoCu-Ti | 14 | 0.296 | 75 | 181 | 13 |
| LoCu-TiZr | 14 | 0.300 | 89 | 196 | 10 |

**Table 4** Tensile strength after braze simulation, free cooling in air.

## Claims

1. A heat treatable aluminium alloy for brazed products with high strength, **characterized in that** the alloy comprises 0.6-0.9 wt% silicon, 0.1-0.35 wt% magnesium, 0.4-0.7wt% manganese, 0.1-0.25 wt% titanium, 0.25-0.35 wt% copper, up to 0.7wt% Fe and optionally 0.05-0.25 wt% zirconium and the balance consisting of aluminium and unavoidable impurities.

2. A clad material for brazed products, **characterized in that** a core of the alloy according to claim 1 is provided with at least one additional layer, said at least one additional layer having a melting temperature which is lower than that of said core.

3. A method of producing a material from the alloy of claim 1, **characterized by** the steps of

   - subjecting said alloy to a casting process,
   - subjecting the obtained material to a hot rolling process
   - subjecting the obtained material to a cold rolling process.

4. The method as claimed in claim 3, **characterized in that** after said casting process the material is scalped and clad with at least one additional layer.

5. The method as claimed in claims 3 or 4, **characterized in that** after said cold rolling the material is subjected to an annealing process.

## Patentansprüche

1. Aushärtbare Aluminiumlegierung für hartgelötete Produkte mit einer hohen Festigkeit, **dadurch gekennzeichnet,** **daß** die Legierung folgendes aufweist:

   0,6 bis 0,9 Gew.-% Silicium, 0,1 bis 0,35 Gew.-% Magnesium, 0,4 bis 0,7 Gew.-% Mangan, 0,1 bis 0,25 Gew.-% Titan, 0,25 bis 0,35 Gew.-% Kupfer, bis zu 0,7 Gew.-% Fe und gegebenenfalls

0,05 bis 0,25 Gew.-% Zirconium, wobei der Rest aus Aluminium und unvermeidbaren Verunreinigungen besteht.

2.  Plattierungsmaterial für hartgelötete Produkte,
    **dadurch gekennzeichnet,**
    **daß** ein Kern aus einer Legierung nach Anspruch 1 mit mindestens einer weiteren Schicht versehen ist, wobei diese mindestens eine weitere Schicht eine Schmelztemperatur aufweist, die niedriger als die des Kerns ist.

3.  Verfahren zum Herstellen eines Materials aus der Legierung nach Anspruch 1, **gekennzeichnet durch** die folgenden Schritte:

    -   die Legierung wird einem Gießverfahren unterzogen,
    -   das erhaltene Material wird einem Warmwalzverfahren unterzogen,
    -   das erhaltene Material wird einem Kaltwalzverfahren unterzogen.

4.  Verfahren nach Anspruch 3,
    **dadurch gekennzeichnet,**
    **daß** das Material nach dem Gießverfahren geschält und mit mindestens einer weiteren Schicht plattiert wird.

5.  Verfahren nach Anspruch 3 oder 4,
    **dadurch gekennzeichnet,**
    **daß** das Material nach dem Kaltwalzen einem Glühverfahren unterzogen wird.

**Revendications**

1.  Alliage d'aluminium traitable par chaleur pour des produits brasés ayant une force élevée, **caractérisé en ce que** l'alliage comporte 0,6 à 0,9 % en poids de silicium, 0,1 à 0,35 % en poids de magnésium, 0,4 à 0,7 % en poids de manganèse, 0,1 à 0,25 % en poids de titane, 0,25 à 0,35 % en poids de cuivre, jusqu'à 0,7 % en poids de Fe et de manière facultative de 0,05 à 0,25 % en poids de zirconium, le reste étant constitué d'aluminium et d'impuretés inévitables.

2.  Matériau de gainage pour des produits brasés, **caractérisé en ce qu'**un coeur de l'alliage selon la revendication 1 est muni d'au moins une couche supplémentaire, ladite au moins une couche supplémentaire ayant une température de fusion qui est inférieure à celle dudit coeur.

3.  Procédé pour produire un matériau à partir de l'alliage selon la revendication 1, **caractérisé par** les étapes consistant à

    -   soumettre ledit alliage à un processus de coulée,
    -   soumettre le matériau obtenu à un processus de roulage à chaud,
    -   soumettre le matériau obtenu à un processus de roulage à froid.

4.  Procédé selon la revendication 3, **caractérisé en ce que**, après ledit processus de coulée, le matériau est écroûté et gainé à l'aide d'au moins une couche supplémentaire.

5.  Procédé selon la revendication 3 ou 4,
    **caractérisé en ce que**, après ledit roulage à froid, le matériau est soumis à un processus de recuit.

Figure 1

Figure 2